# EUROPÄISCHE PATENTSCHRIFT

(11) **EP 2 181 352 B1**
(45) Veröffentlichungstag und Bekanntmachung des Hinweises auf die Patenterteilung: **12.10.2011**
(21) Anmeldenummer: 08801520.1
(22) Anmeldetag: 06.08.2008
(51) Int. Cl.: G02B 21/00

(54) **MIKROSKOP MIT INNENFOKUSSIERUNG**
MICROSCOPE HAVING INTERNAL FOCUSING
MICROSCOPE À FOCALISATION INTERNE

(30) Priorität: 16.08.2007 DE 102007038579
(43) Veröffentlichungstag der Anmeldung: 05.05.2010
(73) Patentinhaber: Carl Zeiss MicroImaging GmbH, 07745 Jena (DE)
(72) Erfinder: HUHSE, Dieter, 12167 Berlin (DE); PACHOLIK, Jörg, 07751 Kunitz (DE); HANFT, Marco, 07743 Jena (DE)
(74) Vertreter: Loritz, Rainer
(86) Internationale Anmeldenummer: PCT/EP2008/006457
(87) Internationale Veröffentlichungsnummer: WO 2009/021659

(56) Entgegenhaltungen:
- EP-A- 1 115 021
- EP-A- 1 319 968
- EP-A- 1 617 250
- EP-A- 1 617 271
- US-A1- 2005 046 936
- US-B1- 7 002 737

## Beschreibung

Die Erfindung betrifft ein Laser-Scanning-Mikroskop sowie ein Steuerverfahren für ein solches Laser-ScMning-Mikroskop.

Um bei einem Laser-Scanning-Microskop eine scharfe Abbildung der Probe zu erhalten, wird zum Einstellen der Fokuslage üblicherweise der Abstand zwischen Mikroskopobjektiv und Probe variiert. Zu diesem Zweck kann einerseits der Probentisch mit der Probe oder andererseits das Mikroskopobjektiv bewegt werden. Auch eine Kombination beider Bewegungen ist möglich.

Die relativen Bewegungen zwischen Objektiv und Probe sind jedoch unter Umständen problematisch. So ist beispielsweise bei eiektrophysiologischen Experimenten eine Vielzahl von feinen Kontakten mit der Probe verbunden. Eine Bewegung des Probentisches könnte diese Kontakte abreißen lassen und ist deswegen zur Festlegung der Fokuslage in der Regel ausgeschlossen. Daneben kann auch die Bewegung des Objektivs ausgeschlossen sein, wenn beispielsweise Kontakte nahe am Objektiv vorbeigeführt werden oder wenn das Objektiv in eine Probenflüssigkeit eingetaucht ist.

Im Stand der Technik ist bei Mikroskopen die sogenannte Objcktivinnenfokussietung bekannt. So zeigt beispielsweise die DE 10 2005 034 441 A1 ein Mikroskopobjektiv mit einer Stelleinrichtung, mittels derer ein objektivinternes Optikelement längs der optischen Achse derart verschiebbar ist, dass die Fokuslage relativ zum Frontelement des Objektivs in Richtung der optischen Achse verschoben wird.

Mittels Objektivinnenfokussierung kann eine scharfe Abbildung ohne relative Bewegung von Objektiv und Probe aufgenommen werden. Das erforderliche Spezialobjektiv ist jedoch extrem aufwendig.

Daneben ist aus US 2005/0046936 A1 ein Laser-Scanning-Mikroskop mit einer längs der optischen Achse verstellbaren Linse in einem Strablaufweiter benannt Dies ermöglicht eine Feineinstellung der Fokuslage ohne Veränderung des Abstands zwischen Probe und Objektiv. In verschiedenen Stellungen der Linse weist das Mikroskop jedoch unterschiedliche Abbildungsvehältnisse auf, wodurch Vergleiche von Daten aus verschiedenen Probentiefen problematisch sind.

Der Erfindung liegt deshalb die Aufgabe zugrunde, ein Laser-Scanning-Mikroskop und ein Steuerverfahren für ein solches anzugeben, die auch mit Standardobjektiven die scharfe Abbildung einer Probe ohne Relativbewegung von Mikroskopobjektiv und Probe ermöglichen, wobei Vergleiche von Daten aus verschiedenen Probentiefen einfacher möglich sein sollen.

Die Aufgabe wird gelöst durch ein Laser-Scanning-Milaoskop, welches die in Anspruch 1 angegebenen Merkmal aufweist, und durch ein Steuerverfahren, welches die in Anspruch 8 angegebenen Merkmale aufweist.

Vorteilhafte Ausgestaltungen der Erfindung sind in den Unteransprüchen angegeben.

Erfindungsgemäß weist ein Laser-Scanning-Miksoskop einen Scanner, ein Mikroskopobjektiv und eine mittels einer Steuereinheit längs der optischen Achse verstellbare Tubuslinse, die zwischen dem Mikroskopobjektiv und einer Zwischenbildebene angeordnet ist und von dem Mikroskopobjektiv kommendes Licht in die Zwischenbildebene fokussiert, durch deren Verstellung die Fokuslage relativ zu einem optischen Frontelement des Mikroskopobjektivs einstellbar ist, auf, wobei die Steuereinheit eine Bewegung des Scanners anhand eines vorgegebenen Korrekturwerts für einen Abbildungsmaßstab der eingestellten Fokuslage so beeinflusst, dass optische Schnitte unabhängig von der Fokuslage mit etwa identischem Abbildungsmaßstab aufnehmbar sind und bei der Beeinflussung anhand des Korrekturwerts eine Amplitude der Bewegung des Scanners an den Abbildungsmaßstab der Fokuslage anpasst. Unter den Begriff der verstellbaren Tubuslinse, fällt im Sinne der Erfindung auch jedes entsprechend wirkende, verstellbare optisches System, das zwischen dem Mikroskopobjektiv und dem Scanner im Mikroskopstrahlengang angeordnet ist.

Da die Tubuslinse außerhalb des Mikroskopobjektivs angeordnet und verstellbar ist, kann das Mikroskop vorteilhafterweise mit einem Standardobjektiv versehen sein. Dennoch kann ohne Relativbewegung zwischen Mikroskopobjektiv und Probe eine scharfe Abbildung der Probe gewonnen werden.

In einer bevorzugten Ausgestaltung ist das Laser-Scanning-Mikroskop mit einer Steuereinheit ausgerüstet, die wiederholt mittels des Scanners einen optischen Schnitt einer Probe abtasten und anschließend durch Verstellen der Tubuslinse eine andere Fokuslage einstellen kann. Damit kann vorteilhafterweise ohne Relativbewegung zwischen Mikroskopobjektiv und Probe in einem Z-Scan ein Stapel optischer Schnitte aus verschiedenen Fokusentfernungen aufgenommen werden. Vorzugsweise legt die Steuereinheit bei einem solchen Z-Scm über einen Tiefenbereich der Probe schrittweise mehrere diskrete Fokuslagen fest und tastet in jeder Fokuslage einen jeweiligen optischen Schnitt als Teil einer z-Stapelaufuahme ab. So kann ein z-Stapel automatisiert aufgenommen werden.

Überraschend wurde ermittelt, dass ein Laser-Scanning-Mikroskop mit einer Apertur zwischen 0,45 und 0,53, insbesondere von 0,45 oder 0,53, und/oder einem Immersionsmedium mit einer Brechzahl zwischen 1,31 und 1,36 die Fokuslage in einem großen Tiefenbereich von 200 µm einstellen kann.

Bei einem Z-Scan mittels Innenfokussienmg ist von Nachteil, dass sich bei Verschiebung der Fokuslage der Abbildungsmaßstab verändert, weil die Vergrößerung neben dem Brennweitenverhältnis zwischen Tubuslinse, und Mikroskopobjektiv auch von der Entfernung der jeweiligen Schnittebene vom Mikroskopobjektiv und vom Abstand zwischen Mikroskopobjektiv und Tubuslinse bestimmt wird. Dadurch sind quantitative Auswertungen der Schnittaufnahmen, beispielsweise Vergleiche von Daten aus verschiedenen Probentiefen, problematisch. Die Schnitte sind deshalb, wenn ein einheitlicher Abbildungsmaßstab erforderlich ist, vor einer weiteren Verwendung mit Hilfe von Bildbearbeitungsalgorithmen unterschiedlich zu skalieren, was zeitaufwendig ist.

Dieser Nachteil wird umgangen indem die Steuereinheit eine Bewegung des Scanners anhand eines vorgegebenen Korrekturwts für einen Abbildungsmaßstab der eingestellten Fokuslage so beeinflusst, dass alle optischen Schnitte mit etwa identischem Abbildungsmaßstab aufnehmbar sind. Die Scanner werden beispielsweise während der Aufnahme eines optischen Schnittes auf einer oder auf beiden Scanachsen mit zunehmender Tiefe der Fokuslage mit veränderter Amplitude ausgelenkt, um die Änderung des Abbildungsmaßstabs auszugleichen. Vorzugsweise ist eine Nachschlagetabelle mit Korrekturwerten für verschiedene Fokuslagen, die vorausberechnet oder in Kahbnerdurchgängen ermittelt werden können, in der Steuereinheit gespeichert. Zwischenwerte können dann beispielsweise durch Interpolation ermittelt werden. Für beide Scanachsen können für dieselbe Fokusentfernung unterschiedliche Korrekturwerte vorgesehen werden. Es kann auch für jede Fokuslage ein Satz aus mehreren Korrekturwerten für eine Korrekturfunktion vorgesehen werden.

In einer Weiterbildung dieser Ausführungsform weist ein Laser-Scanning-Mikroskop zusätzlich zu einer verstellbaren Tubuslinse ein längs der optischen Achse verstellbares Optikelement im Mikroskopobjektiv oder eine längs der optischen Achse verstellbare Kollimationsoptik auf, mittels derer durch die Steuereinheit die Fokuslage einstellbar ist. So kann die vorteilhafte erfindungsgemäße Korrektur des variierenden Abbildungsmaßstabs auch mit komplexeren Anordnungen eingesetzt werden.

ZweckmäBigerweise weist eine Zwischenbildebene zwischen dem Mikroskopobjektiv und einem Scanobjektiv eine konstante Lage relativ zu dem Scanobjektiv, insbesondere auch relativ zum Mikroskopobjektiv, auf.

Das erfindungsgemäße Steuerverfahren wird vorzugsweise von der genannten Steuereinheit durchgeführt. Alternativ kann eine andere Instanz für die Durchführung vorgesehen sein.

Nachfolgend wird die Erfindung anhand von Ausführungsbeispielen näher erläutert.

In den Zeichnungen zeigen:
Fig. 1 eine schematische Darstellung eines Mikroskops mit verstellbarer Tubuslinse,
Fig. 2 einen Ausschnitt aus dem Strahlengang des Mikroskops für zwei verschiedene Stellungen der Tubuslinse,
Fig. 3 denselben Ausschnitt aus dem Strahlengang des Mikroskops mit zusätzlicher Korrektur der Scannerbewegung und
Fig. 4 ein Ablaufdiagramm des Steuerverfahrens.

In allen Zeichnungen haben übereinstimmende Teile gleiche Bezugszeichen.

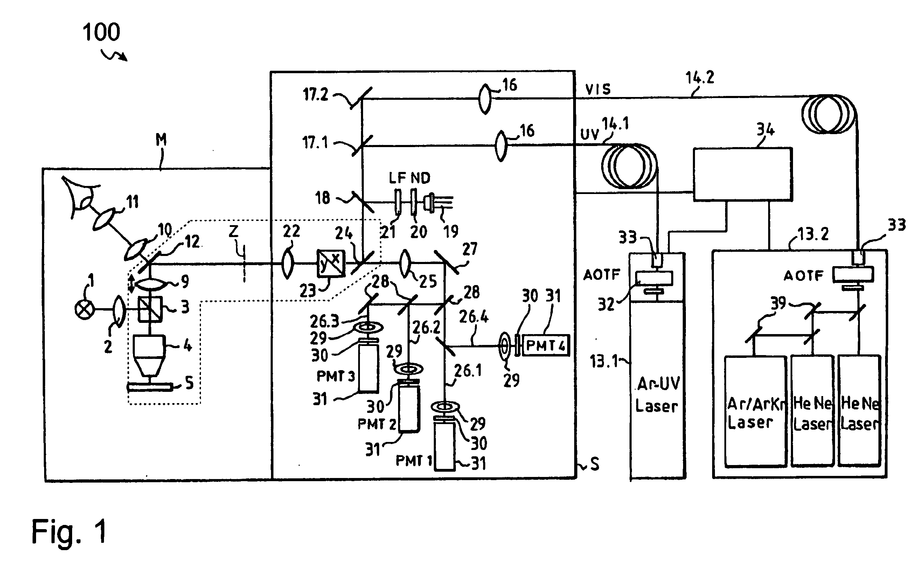

Fig. 1 zeigt ein Mikroskop 100 in schematischer Darstellung. Es umfasst eine Mikroskopeinheit M und einen Scankopf S, die eine gemeinsame optische Schnittstelle über eine Zwischenabbildung in einer Zwischenbildebene Z aufweisen. Der mikroskopische Strahlengang der Mikroskopeinheit M umfasst eine Lichtquelle 1, eine Beleuchtungsoptik 2, einen Strahlteiler 3, ein Mikroskopobjektiv mit Wasserimmersion (n=1,33), eine Tubuslinse 9, die längs der optischen Achse verstellbar ist, den Beobachtungsstrahlengang mit einer Okulartubuslinse 10 und einem Okular 11 sowie einen Strahlteiler 12 zur Einkopplung des Scanstrahls aus dem Scankopf S. Unter dem Mikroskopobjektiv ist eine zu untersuchende Probe 5 auf einem nicht dargestellten Probentisch des Mikroskops 100 angeordnet.

Lasermodule 13.1, 13.2 stellen beispielhafte vier Laser bereit, die über Lichtleitfasern 14.1, 14.2 mit der Lasereinkoppeleinheit des Scankopfes S verbunden sind. Die Einkopplung der Lichtleitfasern 14.1, 14.2 erfolgt über Kollimationsoptiken 16 und Strahlumlenkelemente 17.1, 17.2. Mittels eines teildurchlässigen Spiegels 18 wird ein Überwachungsstrahlengang in Richtung einer Monitordiode 19 der, vorteilhaft auf einem nicht dargestellten, drehbaren Filterrad, Linienfilter 21 sowie Neutralfilter 20 vorgeordnet sind, ausgespiegelt.

Die eigentliche Scaneinheit besteht aus Scanobjektiv 22, Scanner 23, Hauptstrahlteiler 24 und einer gemeinsamen Abbildungsoptik 25 für Detektionskanäle 26.1-26.4. Ein Umlenkprisma 27 hinter der Abbildungsoptik 25 spiegelt die von der Probe 5 kommende Strahlung in Richtung dichroitischer Strahlteiler 28 im konvergenten Strahlengang der Abbildungsoptik 25, denen in ihrem Durchmesser individuell für jeden Detektionskanal 26.1-26.4 veränderbare Pinholes 29 sowie Emissionsfilter 30 und geeignete Empfängerelemente 31 (hier beispielhaft Sekundärelektronenvervielfacher - "PMT") nachgeordnet sind. Die Strahlteiler 28 können in weitergehenden Ausgestaltungen (nicht dargestellt) als Teilerrad mit mehreren Positionen, motorisch durch Schrittmotoren umschaltbar, ausgebildet sein.

Im Lasermodul 13.2 sind Einzel- und Multiwellenlängenlaser vorgesehen, die einzeln oder gemeinsam über einen AOTF in die Faser 14.2 eingekoppelt werden. Die Einkopplung kann in alternativen Ausführungsfonnen (nicht gezeigt) auch über mehrere Fasern parallel erfolgen, deren Strahlung mikroskopseitig nach Durchlaufen einer Anpassoptik durch Farbvereiniger gemischt wird. Auch die Mischung der Strahlung verschiedener Laser am Fasereingang ist möglich und kann anhand der schematisch dargestellten, auswechselbar und schaltbar ausgebildeten Teilerspiegel 39 erfolgen.

Die Einkopplung von UV-Strahlung in die Glasfaser 14.1, vorzugsweise einer Single-Mode-Glasfaser, erfolgt mittels eines AOTF 32 als Strahlablenker. Wenn der Strahl nicht auf den Fasereingang fallen soll, wird er mittels des AOTF 32 vom Fasereingang beispielsweise in Richtung einer nicht dargestellten Lichtfalle abgelenkt. Die Einkoppeloptik 33 zur Einkopplung der Laserstrahlung weist nicht dargestellte Linsensysteme auf, deren Brennweite durch den Strahlquerschnitt der Laser und die für die optimale Einkopplung erforderliche numerische Apertur festgelegt ist. Die aus dem Faserende der Fasern 14.1, 14.2 an der Scaneinheit S divergent austretende Laserstrahlung wird mittels der Kollimationsoptiken 16 auf einen jeweiligen Unendlichstrahl kollimiert.

Eine zentrale Steuereinheit 34 steuert die veränderlichen Bauteile wie Tubuslinse 9, Scanner 23, AOTF 32 und Teilerspiegel 39. Sie stellt gleichzeitig die Schnittstelle für Bedien- und Anzeigeelemente (nicht abgebildet) bereit und ermöglicht einem Bediener so insbesondere die Manipulation der veränderlichen Bauteile, beispielsweise über einen angeschlossenen Mikrocomputer (nicht abgebildet). Die veränderlichen Bauteile können aber auch in automatischen Abläufen von der Steuereinheit 34 selbständig gesteuert werden.

Durch Verschiebung der Tubuslinse 9 längs der optischen Achse kann die Entfernung zwischen der scharf abgebildeten Ebene innerhalb der Probe 5 und dem Mikroskopobjektiv 4 verändert werden, ohne dass dazu das Mikroskopobjektiv 4 oder die Probe 5 bewegt werden muss. So ist insbesondere die Aufnahme von optischen Schnitten in unterschiedlichen Tiefen möglich.

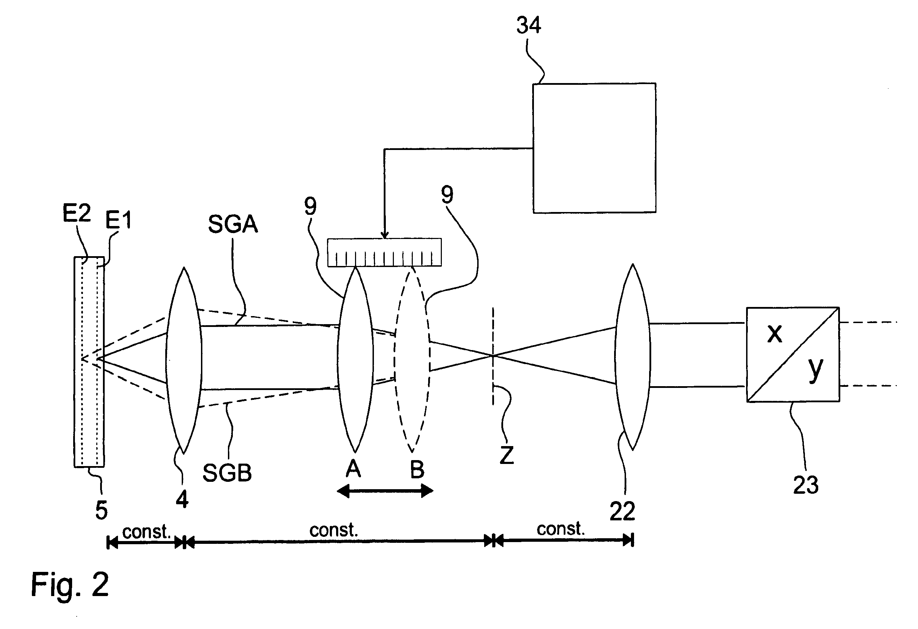

In Fig. 2 ist der in Fig. 1 gestrichelt umgrenzte Bereich ohne die Strahlteiler 12, 24 dargestellt. Anhand zweier (alternativer) Strahlengänge SGA, SGB zwischen Scanner 23 und Probe 5 werden die Auswirkungen einer Verschiebung der Tubuslinse 9 zwischen zwei beispielhaften Stellungen A und B schematisch verdeutlicht. Die Lage der Zwischenbildebene Z ist sowohl bezüglich des Scanobjektivs 22 als auch bezüglich des Mikroskopobjektivs 4 für alle Stellungen der Tubuslinse 9 identisch. Ebenso ist der Abstand zwischen Probe 5 und Mikroskopobjektiv 4 konstant. Mit der Stellung der Tubuslinse 9 variiert der Strahlengang zwischen Tubuslinse 9 und Mikroskopobjektiv beziehungsweise Probe 5. Dabei sind die Abweichungen zur besseren Erkennbarkeit der Unterschiede zwischen den Strahlengängen A und B übertrieben gezeichnet, so dass die gezeigten Öffnungswinkel nicht maßstabsgetreu sind. In Stellung A der Tubuslinse 9 liegt der Fokus in einer oberflächennahen Ebene E1 der Probe 5. Während einer Verschiebung der Tubuslinse 9 in die Stellung B wandert der Fokus in die oberflächenfeme Ebene E2.

Dies kann zur Aufnahme eines z-Stapels optischer Schnitte genutzt werden. Die Steuereinheit 34 fährt durch Verstellung der Tubuslinse 9 den Fokus beispielsweise in diskreten Schritten über einen vorgegebenen Tiefenbereich der Probe. In jeder diskreten Fokuslage wird die Tubuslinse 9 für einen Scanvorgang angehalten und ein entsprechender optischer Schnitt in scharfer Abbildung aufgenommen und gespeichert. Der z-Stapel kann in bekannter Weise als dreidimensionale Abbildung ausgewertet werden.

Wegen der größeren Entfernung zum Mikroskopobjektiv ist der Abbildungsmaßstab des Mikroskops 100 in Stellung A und den zwischen Stellung A und Stellung B liegenden Stellungen größer als in Stellung B. Dies führt zu unterschiedlichen Abbildungsmaßstäben innerhalb eines z-Stapels. Die optischen Schnitte eines z-Stapels können mittels Bildverarbeitungsalgorithmen durch Software auf einen einheitlichen Abbildungsmaßstab umgerechnet werden.

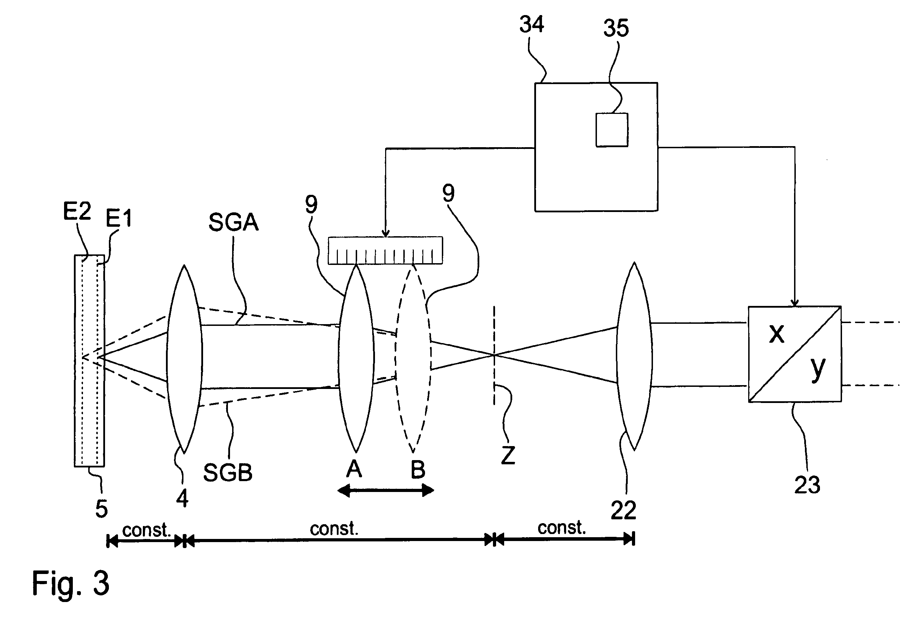

Fig. 3 zeigt in Entsprechung zu Fig. 2 einen Strahlengangausschnitt einer besonderen Ausführungsform des Mikroskops 100, bei der bereits während der Aufnahme eines z-Stapels die unterschiedlichen Abbildungsmaßstäbe kompensiert werden durch eine Beeinflussung der Bewegung des Scanners 23 bei der Aufnahme eines optischen Schnittes. Die Steuereinheit 34 ist zu diesem Zweck mit einer Nachschlagetabelle 35 versehen, in der im Voraus bestimmte Korrekturwertsätze für die Abbildungsmaßstäbe in mehreren Fokusentfernungen gespeichert sind.

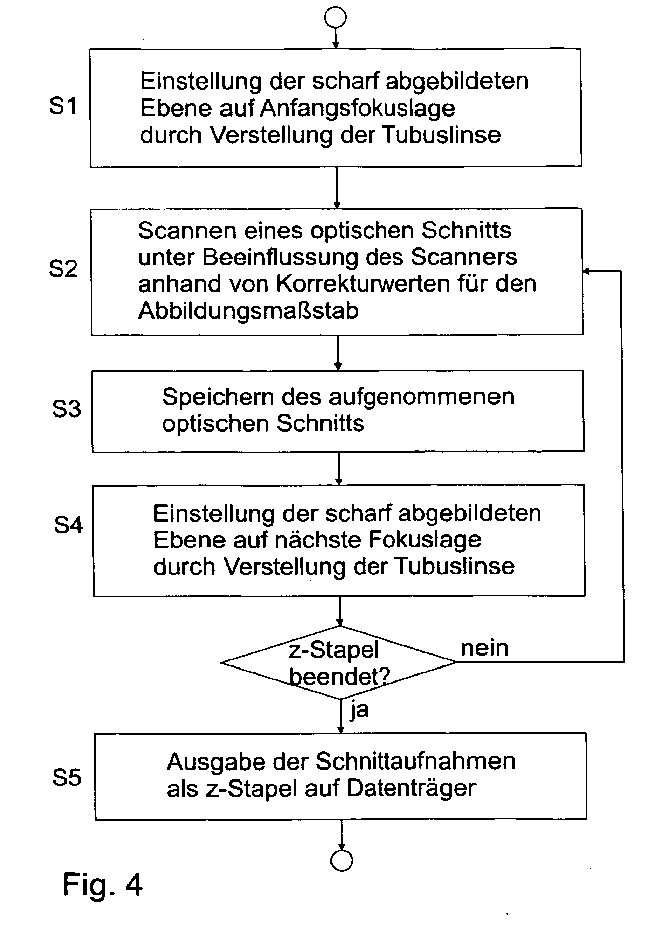

In Fig. 4 ist der Ablauf des Steuerverfahrens dargestellt. Zur Aufnahme eines z-Stapels korrigierter optischer Schnitte stellt die Steuereinheit 34 in Schritt S 1 durch Verstellung der Tubuslinse 9 zunächst eine von einem Bediener wählbare Anfangsfokuslage in der Probe ein.

In Schritt S2 wird die Probe in grundsätzlich bekannter Weise quer zur optischen Achse des Mikroskops 100 gescannt. Dabei wird die reguläre Bewegung des Scanners 23, mit anderen Worten, der Scannerspiegel (nicht abgebildet), manipuliert. Dies geschieht, indem die Amplitude der Spiegelbewegung anhand der für die betreffende Fokusentfernung gespeicherten Korrekturwerte modifiziert wird. Beispielsweise ergibt sich so für eine größere Fokusentfernung, also eine Fokuslage tiefer in der Probe 5, bei der ein größerer Abbildungsmaßstab vorliegt, eine kleinere Spiegelauslenkung. So kann der größere Abbildungsmaßstab kompensiert werden. In weitergehenden Ausgestaltungen (nicht gezeigt) kann auch eine komplexere Bewegungsweise der Scannerspiegel bewirkt werden. Die notwendigen Korrekturwerte können durch theoretische Optikrechnungen und/oder Kalibriermessungen ermittelt werden.

Der aufgenommene optische Schnitt wird schließlich in Schritt S3 gespeichert. In Schritt S4 stellt die Steuereinheit 34 die nächste Fokuslage ein. Wenn festgestellt wird, dass der z-Stapel noch nicht vollständig durchlaufen ist, wird das Verfahren mit Schritt S2 fortgesetzt. Anderenfalls wird in Schritt S5 der z-Stapel beispielhaft auf einem Datenträger ausgegeben und das Verfahren beendet. Alternativ oder zusätzliche kann der z-Stapel über eine Schnittstelle an einen Mikrocomputer zur weiteren Verarbeitung oder Auswertung übertragen werden.

### Bezugszeichenliste

- 1: Lichtquelle
- 2: Beleuchtungsoptik
- 3: Strahlteiler
- 4: Mikroskopobjektiv
- 5: Probe
- 9: Tubuslinse
- 10: Okulartubuslinse
- 11: Okular
- 12: Strahlteiler
- 13.1, 13.2: Laser
- 14: Lichtleitfasern
- 16: Kollimationsoptik
- 17.1,: 17.2 Strahlumlenkelement
- 18: Teildurchlässiger Spiegel
- 19: Monitordiode
- 20: Neutralfilter
- 21: Linienfilter
- 22: Scanobjektiv
- 23: Scanner
- 24: Hauptstrahlteiler
- 25: Abbildungsoptik
- 26.1-26.4: Detektionskanäle
- 27: Umlenkprisma
- 28: Dichroitischer Strahlteiler
- 29: Pinhole
- 30: Emissionsfilter
- 31: Empfängerelement
- 32: AOTF
- 33: Einkoppeloptik
- 34: Steuereinheit
- 35: Nachschlagetabelle
- 39: Strahlteiler
- M: Mikroskopeinheit
- S: Scankopf
- E1: Oberflächennahe Fokusebene
- E2: Oberflächenfeme Fokusebene
- A, B: Stellung der Tubuslinse
- SGA: Strahlengang in Stellung A der Tubuslinse
- SGB: Strahlengang in Stellung B der Tubuslinse
- Z: Zwischenbildebene

## Patentansprüche

1. Laser-Scanning-Mikroskop (100) mit einem Scanner (23), einem Mikroskopobjektiv (4) und einer mittels einer Steuereinheit (34) längs der optischen Achse verstellbaren Linse, durch deren Verstellung die Fokuslage (E1, E2) in der Probe relativ zu einem optischen Frontelement des Mikroskopobjektivs (4) einstellbar ist, **dadurch gekennzeichnet, dass** die verstellbare Linse eine Tubuslinse (9) ist, die zwischen dem Mikroskopobjektiv (4) und einer Zwischenbildebene (Z) angeordnet ist und von dem Mikroskopobjektiv (4) kommendes Licht in die Zwischenbildebene (Z) fokussiert, wobei die Steuereinheit (34) eine Bewegung des Scanners (23) anhand eines vorgegebenen Korrekturwerts für einen Abbildungsmaßstab der eingestellten Fokuslage (E1, E2) so beeinflusst, dass optische Schnitte unabhängig von der Fokuslage mit etwa identischem Abbildungsmaßstab aufnehmbar sind und bei der Beeinflussung anhand des Korrekturwerts eine Amplitude der Bewegung des Scanners (23) an den Abbildungtamaßstah der Fokuslage (E1, E2) anpasst.

2. Laser-Seanning-Mikroskop (100) nach Anspruch 1, das zusätzlich zu der verstellbaren Tubuslinse (9) ein längs der optischen Achse verstellbares Optikelement im Mikroskopobjektiv (4) oder eine längs der optischen Achse verstellbare Kollimationsoptik (16) aufweist, mittels dem durch die Steuereinheit (34) die Fokuslage (E1, E2) einstellbar ist.

3. Laser-Scanning-Mikroskop (100) nach einem der vorhergehenden Ansprüche, wobei eine Zwischenbildebene (Z) zwischen dem Mikroskopobjektiv (4) und einem Scanobjektiv (22) eine konstante Lage relativ zu dem Scanobjektiv (22) aufweist.

4. Laser-Scanning-Mikroskop (100) nach einem der vorhergehenden Ansprüche mit einer Steuereinheit (34), die wiederholt
- mittels des Scanners (23) einen optischen Schnitt einer Probe (5) abtastet und
- anschließend durch Verstellen der Tubuslinse (9) eine andere Fokuslage (E1, E2) einstellt.

5. Laser-Scanning-Mikroskop (100) nach Anspruch 4, wobei die Steuereinheit (34) über einen Tiefenbereich der Probe (5) schrittweise mehrere diskrete Fokuslagen (E1, E2) einstellt und in jeder Fokuslage (E1, E2) einen jeweiligen optischen Schnitt als Teil einer Stapelaufnahme abtastet.

6. Laser-Scanning-Milcroskop (100) nach Anspruch 4 oder 5, wobei die Steuereinheit (34) eine Bewegung des Scanners (23) anhand eines vorgegebenen Korrekturwerts für einen Abbildungsmaßstab der eingestellten Fokuslage (E1, E2) so beeinflusst, dass alle optischen Schnitte mit etwa identischem Abbildungsmaßstab aufnehmbar sind.

7. Laser-Scanmng-Mikroskop (100) nach Anspruch 6, wobei die Steuereinheit (34) bei der Beeinflussung anhand des Korrekturwerts eine Amplitude der Bewegung des Scanners (23) an einen Abbildungsmaßstab der Fokuslage (E1, E2) anpasst.

8. Steuerverfahren für ein Laser-Scanning-Mikroskop (100) mit einem Scanner (23), einen Mikroskopobjektiv (4) und einer mittels einer Steuereinheit (34) längs der optischen Achse verstellbaren Linse, durch deren Verstellung die Fokuslage (E1, E2) in der Probe relativ zu einem optischen Frontelement des Mikroskopobjektivs (4) einstellbar ist, wobei folgende Schritte wiederholt durchgeführt werden:
- Abtasten eines optischen Schnitts einer Probe (5) mittels des Scanners (23) und
- anschließendes Einstellen einer anderen Fokoslage (E1, E2) durch Verstellen der Linse,
**dadurch gekennzeichnet dass** die verstellbare Linse eine Tubuslinse (9) ist, die zwischen dem Mikroskopobjektiv (4) und einer Zwischenbildebene (Z) angeordnet ist und von dem Mikroskopobjektiv (4) kommendes Licht in die Zwischenbildebene (Z) fokussiert, wobei eine Bewegung des Scanners (23) anhand eines vorgegebenen Korrekturwerts für einen Abbildungsmaßstab der eingestellten Fokuslage (E1, E2) so beeinflusst wird, dass alle optischen Schnitte mit etwa identischem Abbildungsmaßstab aufgenommen werden, wobei bei der Beeinflussung anhand des Korrekturwerts eine Amplitude der Bewegung des Scanners (23) an einen Abbildungsmaßstab der Fokuslage (E1, E2) angepasst wird.

9. Steuerverfahren nach Anspruch 8, wobei über einen Tiefenbereich der Probe (5) schrittweise mehrere diskrete Fokuslagen (bei, E2) eingestellt und in jeder Fokuslage (E1, E2) ein jeweiliger optischer Schnitt als Teil einer Stapelaufnahme abgetastet wird.

10. Steuerverfahren nach einem der Ansprüche 8 bis 9, wobei zum Einstellen der Fokuslage (E1, E2) zusätzlich zu der verstellbaren Tubuslinse (9) ein längs der optischen Achse verstellbares Optikelement im Mikroskopobjektiv (4) oder eine längs der optischen Achse verstellbare Kollimationsopuk (16) verwendet werden.

## Claims

1. Laser scanning microscope (100) having a scanner (23), a microscope objective (4) and a lens that is adjustable along the optical axis by means of a control unit (34) and by the adjustment of which the focal position (E1, E2) in the sample is settable relative to an optical front element of the microscope objective (4), **characterized in that** the adjustable lens is a tube lens (9) which is arranged between the microscope objective (4) and an intermediate image plane (Z) and focuses light coming from the microscope objective (4) into the intermediate image plane (Z), the control unit (34) influencing a movement of the scanner (23) with the aid of a prescribed correction value for an imaging scale of the set focal position (E1, E2) such that optical sections are recordable with an approximately identical imaging scale independently of the focal position, and adapting an amplitude of the movement of the scanner (23) to the imaging scale of the focal position (E1, E2) with the aid of the correction value while exerting the influence.

2. Laser scanning microscope (100) according to Claim 1 which, in addition to the adjustable tube lens (9), has in the microscope objective (4) an optical element adjustable along the optical axis, or has a collimating optics (16) which is adjustable along the optical axis by means of which the focal position (E1, E2) is settable by the control unit (34).

3. Laser scanning microscope (100) according to one of the preceding claims, in which an intermediate image plane (Z) between the microscope objective (4) and a scanning objective (22) has a constants position relative to the scanning objective (22).

4. Laser scanning microscope (100) according to one of the preceding claims, having a control unit (34) which repeatedly
- scans an optical section of a sample (5) by means of the scanner (23), and
- subsequently sets another focal position (E1, E2) by adjusting the tube lens (9).

5. Laser scanning microscope (100) according to Claim 4, in which the control unit (34) sets a plurality of discrete focal positions (E1, E2) in stepwise fashion over a depth range of the sample (5) and, in each focal position (E1, E2), scans a respective optical section as part of a stack recording.

6. Laser scanning microscope (100) according to Claim 4 or 5, in which the control unit (34) influences a movement of the scanner (23) with the aid of a prescribed correction value for an imaging scale of the set focal position (E1, E2) such that all the optical sections are recordable with an approximately identical imaging scale.

7. Laser scanning microscope (100) according to Claim 6, in which the control unit (34) adapts an amplitude of the movement of the scanner (23) to an imaging scale of the focal position (E1, E2) with the aid of the correction value while exerting the influence.

8. Control method for a laser scanning microscope (100) having a scanner (23), a microscope objective (4) and a lens that is adjustable along the optical axis by means of a control unit (34) and by the adjustment of which the focal position (E1, E2) in the sample is settable relative to an optical front element of the microscope objective (4), the following steps being carried out repeatedly:
- scanning an optical section of a sample (5) by means of the scanner (23), and
- subsequently setting another focal position (E1, E2) by adjusting the lens,
**characterized in that** the adjustable lens is a tube lens (9) which is arranged between the microscope objective (4) and an intermediate image plane (Z) and focuses light coming from the microscope objective (4) into the intermediate image plane (Z), a movement of the scanner (23) being influenced with the aid of a prescribed correction value for an imaging scale of the set focal position (E1, E2) such that all the optical sections are recorded with an approximately identical imaging scale, an amplitude of the movement of the scanner (23) being adapted to an imaging scale of the focal position (E1, E2) with the aid of the correction value while the influence is-being exerted.

9. Control method according to Claim 8, in which a plurality of discrete focal positions (E1, E2) are set in stepwise fashion over a depth range of the sample (5), and in each focal position (E1, E2) a respective optical section is scanned as part of a stack recording.

10. Control method according to either of Claims 8 and 9, in which, in order to set the focal position (E1, E2), use is made, in addition to the adjustable tube lens (9), of an optical element, adjustable along the optical axis, in the microscope objective (4), or of a collimating optics (16) which is adjustable along the optical axis.

## Revendications

1. Microscope à balayage laser (100) avec un système de balayage (23), un objectif de microscope (4) et une lentille réglable le long de l'axe optique au moyen d'une unité de commande (34), dont le réglage permet d'ajuster la position de la focalisation (E1, E2) dans l'échantillon par rapport à un élément optique frontal de l'objectif de microscope (4), **caractérisé en ce que** la lentille réglable est une lentille tubulaire (9) disposée entre l'objectif de microscope (4) et un plan image intermédiaire (Z) et qui focalise la lumière provenant de l'objectif du microscope (4) dans le plan image intermédiaire (Z), l'unité de commande (34) influençant un mouvement du système de balayage (23) en se fondant sur une valeur de correction définie pour une échelle de reproduction de la position ajustée de la focalisation (E1, E2) de manière à pouvoir enregistrer des coupes optiques avec une échelle de reproduction sensiblement identique indépendamment de la position de la focalisation et à adapter une amplitude du mouvement du système de balayage (23) à l'échelle de reproduction de la position de la focalisation (E1, E2) lors de l'influence fondée sur la valeur de correction.

2. Microscope à balayage laser (100) selon la revendication 1, présentant en plus de la lentille tubulaire (9) réglable, un élément optique réglable le long de l'axe optique dans l'objectif du microscope (4), ou une optique de collimation (16) réglable le long de l'axe optique, permettant d'ajuster la position de la focalisation (E1, E2) au moyen de l'unité de commande (34).

3. Microscope à balayage laser (100) selon une des revendications précédentes, dans lequel un plan image intermédiaire (Z) entre l'objectif de microscope (4) et un objectif de balayage (22) présente une position constante par rapport à l'objectif de balayage (22).

4. Microscope à balayage laser (100) selon une des revendications précédentes avec une unité de commande (34) qui de manière répétitive,
- explore une coupe optique d'un échantillon (5) au moyen du système de balayage (23) et
- ajuste ensuite une autre position de la focalisation (E1, E2) par l'intermédiaire du réglage de la lentille tubulaire (9).

5. Microscope à balayage laser (100) selon la revendication 4, dans lequel l'unité de commande (34) ajuste pas à pas plusieurs positions discrètes de la focalisation (E1, E2) sur une plage de profondeurs de l'échantillon (5) et explore dans chaque position de la focalisation (E1, E2) une coupe optique correspondante faisant partie de l'enregistrement de l'empilement.

6. Microscope à balayage laser (100) selon la revendication 4 ou 5, dans lequel l'unité de commande (34) influence un mouvement du système de balayage (23) en se fondant sur une valeur de correction définie pour une échelle de reproduction de la position ajustée de la focalisation (E1, E2) de manière à pouvoir enregistrer toutes les coupes optiques avec une échelle de reproduction sensiblement identique.

7. Microscope à balayage laser (100) selon la revendication 6, dans lequel l'unité de commande (34) lors de l'influence fondée sur la valeur de correction, adapte une amplitude du mouvement du système de balayage (23) à une échelle de reproduction de la position de la focalisation (E1, E2).

8. Procédé de commande pour un microscope à balayage laser (100) avec un système de balayage (23), un objectif de microscope (4) et une lentille réglable le long de l'axe optique au moyen d'une unité de commande (34), dont le réglage permet d'ajuster la position de la focalisation (E1, E2) dans l'échantillon par rapport à un élément optique frontal de l'objectif de microscope (4), dans lequel les étapes suivantes sont exécutées de manière répétitive :
- exploration d'une coupe optique d'un échantillon (5) au moyen du système de balayage (23) et
- ajustage ensuite d'une autre position de la focalisation (E1, E2) par réglage de la lentille, **caractérisé en ce que** la lentille réglable est une lentille tubulaire (9) disposée entre l'objectif de microscope (4) et un plan image intermédiaire (Z) et qui focalise la lumière provenant de l'objectif du microscope (4) dans le plan image intermédiaire (Z), un mouvement du système de balayage (23) fondé sur une valeur de correction définie pour une échelle de reproduction de la position ajustée de la focalisation (E1, E2) étant influencé de manière à pouvoir enregistrer toutes les coupes optiques avec une échelle de reproduction sensiblement identique, une amplitude du mouvement du système de balayage (23) étant adaptée à une échelle de reproduction de la position de la focalisation (E1, E2) lors de l'influence fondée sur la valeur de correction.

9. Procédé de commande selon la revendication 8, dans lequel on ajuste pas à pas plusieurs positions discrètes de la focalisation (E1, E2) sur une plage de profondeurs de l'échantillon (5) et on explore dans chaque position de la focalisation (E1, E2) une coupe optique correspondante faisant partie d'un enregistrement de l'empilement.

10. Procédé de commande selon une des revendications 8 à 9, dans lequel pour l'ajustage de la position de la focalisation (E1, E2), en plus de la lentille tubulaire (9) réglable, on utilise un élément optique réglable le long de l'axe optique dans l'objectif du microscope (4) ou une optique de collimation (16) réglable le long de l'axe optique.
